# FASCICULE DE BREVET EUROPEEN

(11) **EP 0 863 092 B1**
(45) Date de publication et mention de la délivrance du brevet: **09.10.2002**
(21) Numéro de dépôt: 98410017.2
(22) Date de dépôt: 25.02.1998
(51) Int. Cl.: B65G 7/08, G10C 9/00, B62B 3/04

(54) **Dispositif de basculement d'un piano sur sa tranche**
Kippvorrichtung für ein Piano
Tilting apparatus for a piano

(30) Priorité: 26.02.1997 FR 9702517; 29.05.1997 FR 9706833
(43) Date de publication de la demande: 09.09.1998
(73) Titulaire: ANNECY ELECTRONIQUE, F-74410 Saint Jorioz (FR)
(72) Inventeur: Wintz, Bernard, 74410 Saint Jorioz (FR)
(74) Mandataire: Gasquet, Denis

(56) Documents cités:
- US-A- 4 491 334

## Description

La présente invention concerne un dispositif de basculement d'un piano et plus particulièrement d'un piano à queue sur un de ses chants latéraux et inversement ainsi qu'un procédé de basculement utilisant ce dispositif.

Le déplacement d'un piano nécessite généralement une main d'oeuvre nombreuse du fait de son poids et de son encombrement, sa manipulation et sa manutention sont, de plus, rendues délicates par la fragilité dudit piano. Ainsi, il est généralement nécessaire d'être au moins trois ou quatre personnes pour effectuer un tel déplacement.

Pour déplacer un piano à queue, il s'agit de positionner celui-ci sur son chant latéral rectiligne en le basculant afin, d'une part, de pouvoir enlever les pieds, et d'autre part, de pouvoir positionner ledit piano sur un chariot de type classique ou sur une palette voire un plateau support destiné à être manutentionné grâce à un chariot du type de celui décrit dans la demande de brevet européenne EP 0 755 841 de la demanderesse.

Il existe des dispositifs destinés à permettre le basculement d'un piano à queue sur son chant latéral, cependant ces dispositifs présentent le plus souvent un appareillage compliqué, coûteux et difficile à mettre en oeuvre. De plus, l'utilisation de ces dispositifs nécessite généralement plusieurs personnes lors de leur mise en oeuvre.

On connait ainsi un dispositif complexe décrit dans le brevet US.4.491 334 qui utilise une structure rigide destinée à être assemblée au piano pour permettre son basculement à l'aide d'une rampe de forme courbe.

Ainsi, le dispositif de basculement selon l'invention se propose de résoudre les inconvénients précités grâce à des moyens simples, robustes et fiables destinés à permettre la manutention aisée d'un piano par une personne seule, c'est-à-dire son basculement sur son chant latéral ainsi que l'opération inverse.

Ainsi, selon sa caractéristique principale, le dispositif de basculement est destiné au basculement d'un piano de sa position normale, où il est posé sur ses pieds, vers une position couchée, où il est posé sur un de ses chants latéraux et inversement, il est muni de moyens de basculement comportant au moins un organe principal de basculement constitué par une rampe de basculement de forme courbe et est caractérisé en ce qu'il comporte des moyens de commande des moyens de basculement permettant à ceux-ci de passer d'une position de blocage où le piano est dans une position légèrement surélevée à une position de basculement où le piano et les moyens de basculement basculent vers la position couchée du piano et inversement, lesdits moyens étant constitués par une béquille articulée et des organes de commande de la béquille.

Selon un mode de réalisation, ladite béquille, pouvant pivoter d'une position de blocage où elle fait saillie en dessous de la rampe de basculement de l'organe principal à une position de basculement où elle est escamotée par rapport à ladite rampe et inversement.

Selon un mode de réalisation du dispositif de basculement de l'invention, la rampe de basculement de l'organe principal possède la forme d'un quart d'ellipse.

Selon une autre caractéristique, l'organe principal de basculement est destiné à être monté à l'aplomb de la partie frontale du piano sur le piano lui même ou sur des moyens de liaison et de transmission solidaires du piano.

Selon une caractéristique complémentaire, le dispositif de basculement d'un piano comporte un support de piano sur lequel est destiné à être basculé le piano, ledit support étant destiné à être monté sur un chant latéral du piano.

Selon ce mode de réalisation, la position de blocage de la béquille correspond à une position légèrement surélevée du piano où il se trouve en appui sur son pied arrière, son pied avant droit et ladite béquille.

Selon une autre caractéristique, les moyens de basculement permettent, lorsqu'ils sont en position de basculement, le basculement du piano sous l'impulsion de son propre poids.

Par ailleurs, le procédé de basculement d'un piano à l'aide d'un dispositif de basculement selon l'invention est caractérisé en ce qu'une étape préliminaire consiste à monter les moyens de basculement sur le piano.

De plus, ledit procédé comporte une étape principale qui consiste à l'aide de moyens de commande à faire passer les moyens de basculement de leur position de blocage à leur position de basculement.

D'autres caractéristiques et avantages de l'invention se dégageront de la description qui va suivre en regard des dessins annexés qui ne sont donnés qu'à titre d'exemples non limitatifs.

Les figures 1 à 5c illustrent le mode de réalisation préféré de l'invention.

La figure 1 illustre en perspective l'ensemble du dispositif positionné sur un piano.

La figure 2a illustre l'organe principal de basculement en vue de face.

La figure 2b illustre l'organe principal de basculement en vue latérale.

La figure 3a illustre les moyens de liaison et de transmission en vue arrière.

La figure 3b représente les moyens de liaison et de transmission en vue latérale.

La figure 4 représente le piano et son dispositif de basculement en vue latérale.

Les figures 5a, 5b, 5c illustrent schématiquement le procédé de basculement d'un piano en vue de face.

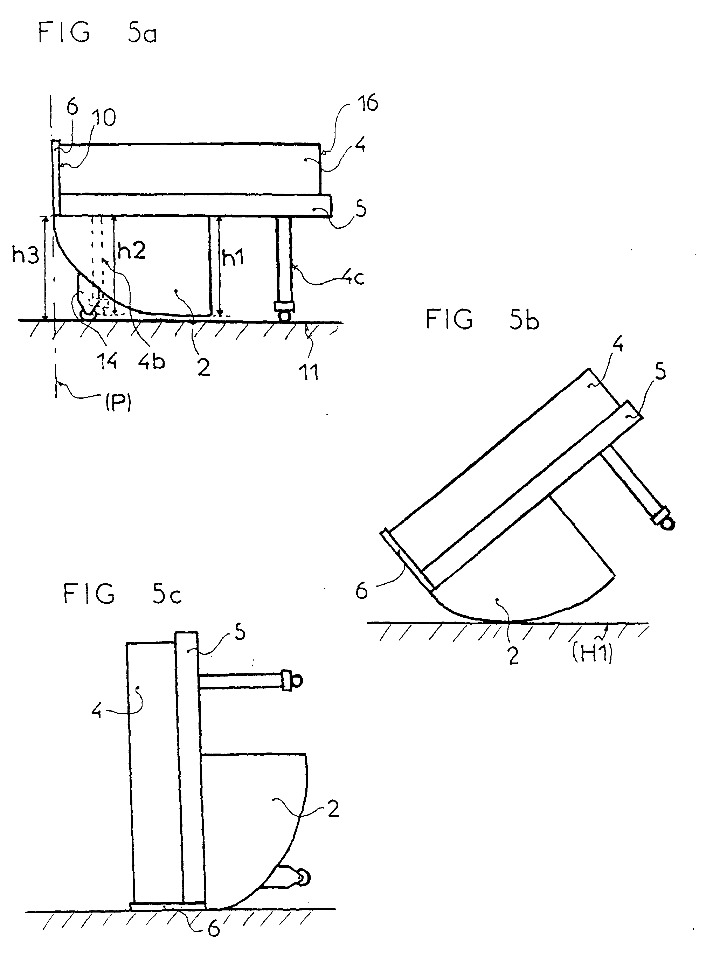

La figure 5a illustre la position de blocage des moyens de basculement et la position surélevée du piano.

La figure 5b illustre le basculement de l'organe principal de basculement et du piano.

La figure 5c illustre le piano dans sa position couchée sur son chant latéral après le basculement.

Selon le mode de réalisation préféré de l'invention, le dispositif de basculement, portant la référence générale (1) comporte des moyens de basculement du piano qui sont constitués par au moins un organe principal de basculement (2), et éventuellement, par un ou plusieurs organes complémentaires de basculement (3).

Lesdits moyens de basculement sont disposés et montés sur le piano de manière à ce que le basculement s'effectue, au moins en partie, sous l'effet des forces de gravité liées au poids du piano, et ne nécessite qu'une assistance manuelle réduite.

Le dispositif de basculement (1) est destiné à permettre le basculement d'un piano (4) et plus particulièrement d'un piano de type piano à queue de sa position normale où il est posé sur ses pieds, vers une position couchée (B) où il est posé sur un de ses chants latéraux et inversement.

Notons que selon ce mode de réalisation du dispositif et selon le procédé de basculement, le piano (4) est destiné à être basculé sur son chant latéral rectiligne (10) afin de se trouver clans une position couchée (B) stable. Toutefois, pour certains pianos, la position couchée sur le chant latéral (16) opposé au chant latéral (10) le plus long pourrait être stable également et lesdits pianos pourraient ainsi être basculés indifféremment sur l'un ou l'autre de leurs chants latéraux (10, 16).

Le dispositif (1) comporte un support de piano (6) sur lequel est destiné à être basculé le piano (4). Notons que ledit support de piano (6), communément appelé "luge", peut être constitué par un chariot à roues orientables ou par une simple palette que l'on pourra déplacer, une fois que le piano est basculé, à l'aide d'un système de traverses et de longerons motorisés tels que celui décrit, par exemple, dans le brevet EP 0 755 841.

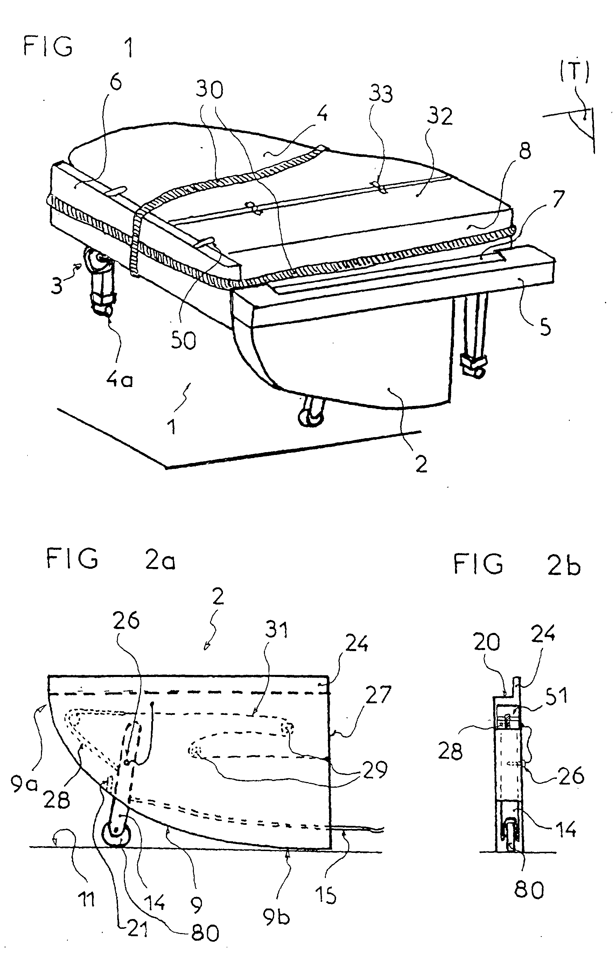

Selon le mode de réalisation préféré, le dispositif (1) illustré figure 1 à 5c comporte un organe principal de basculement (2) destiné à être fixé soit directement au piano (4), soit à des moyens de liaison et de transmission (5) solidaires dudit piano et capables de transmettre le mouvement de bascule de l'organe (2) au piano (4). Par ailleurs, le dispositif (1) comporte également un organe complémentaire de basculement (3) destiné à être disposé sur le pied arrière (4a) du piano (4) afin notamment de préserver celui-ci lors du basculement.

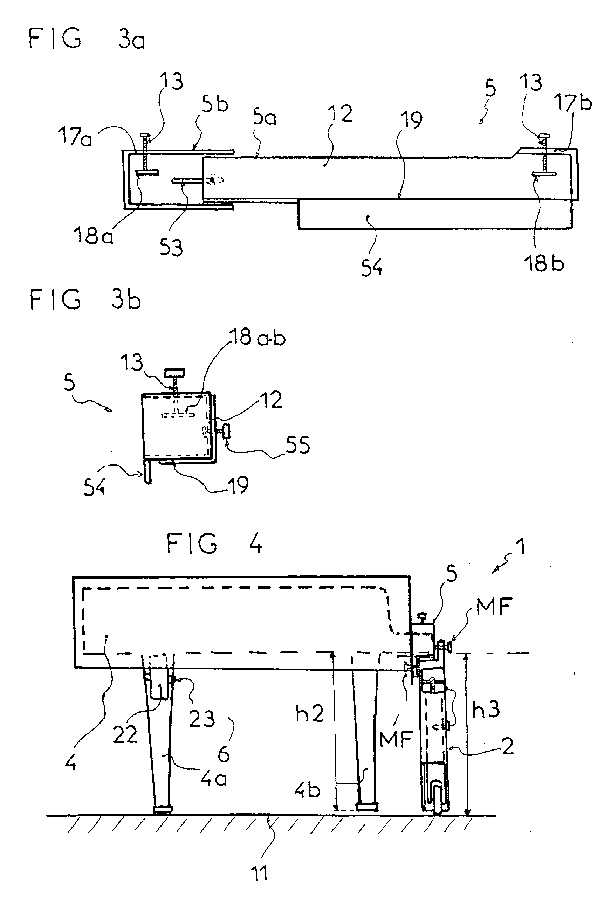

Selon le mode de réalisation préféré, les moyens de liaison et de transmission sont constitués par un demi caisson (5) illustré figure 3a et 3b dont les dimensions peuvent être réglables et qui est destiné à être fixé autour du clavier (7) sur la partie frontale (8) du piano (4), comme le montre la figure 1. Le dispositif comporte des moyens de fixation (MF) destinés à permettre la fixation de l'organe principal de basculement (2) sur le demi caisson, et plus particulièrement, sur deux portions de paroi verticale (12, 54) décrites ultérieurement, avantageusement à l'aplomb de la partie frontale (8) du piano (4).

Le demi caisson (5) est avantageusement constitué par une portion principale (5a) sur laquelle est montée de manière coulissante une portion secondaire (5b), des moyens de réglage étant prévus afin de pouvoir verrouiller les positions respectives desdites portions lorsque celles-ci sont positionnées de manière à former un demi caisson (5) dont les dimensions permettent sa fixation autour du clavier et de son capot de protection (7).

Selon le mode de réalisation préféré, les moyens de réglage sont constitués de manière connue en soi par au moins une tige filetée s'étendant de la paroi frontale (12) de la portion principale (5a) du demi caisson à travers une lumière transversale de la portion secondaire, un écrou à ailette (55) permettant de bloquer le coulissement respectif des dites portions. Afin de permettre la fixation du demi caisson (5) sur le clavier, celui-ci comporte à chacune de ses extrémité deux tiges filetées (13) disposées dans deux portions de paroi supérieure (17a, 17b) de chacune des portions (5a, 5b) du demi caisson, lesdites tiges portant chacune une surface d'appui (18a, 18b) à leur extrémité destinées à permettre de coincer les joues du clavier contre la paroi inférieure (19) du demi caisson. Notons que les surfaces d'appuis (18a, 18b), la paroi inférieure (19) et les différentes parties internes du caisson entrant en contact avec le piano peuvent être avantageusement munies de moyens de protection tels que de la mousse ou de la moquette par exemple, afin de préserver l'ébénisterie du piano (4) lors de la mise en place du demi caisson.

Selon le mode de réalisation préféré, l'organe de basculement principal (2) illustré figure 2a et 2b est destiné à être monté à l'aplomb du demi caisson (5). Il comporte sur sa partie inférieure une rampe de basculement (9) de forme courbe dans un plan transversal (T) perpendiculaire au champ latéral (10). Lorsque l'organe de basculement (2) est monté sous le demi caisson (5) ou directement sous la partie frontale (8) du piano (4), la courbure de ladite rampe prolonge à son extrémité latérale (9a) le plan vertical (P) du support de piano (6) quand celui-ci est monté sur le chant latéral (10) du piano et est à son extrémité inférieure (9b) tangente au plan horizontal (H1) du sol (11). Entre ses deux extrémités (9a, 9b), la rampe (9) possède avantageusement une forme courbe telle qu'un quart d'ellipse, par exemple comme le montre les figures 2a et 5a.

Ainsi, selon le mode de réalisation préféré, l'organe principal de basculement a avantageusement la forme d'un quart d'ellipse, sa paroi supérieure (20) correspond au demi grand axe de l'ellipse et est destinée à être fixée grâce aux moyens de fixation (MF) au demi caisson (5) et notamment à deux portions de parois verticales (12, 54) de celui-ci lorsqu'il est mis en place autour du clavier (7). Il va de soi que la rampe de basculement (9) peut posséder une forme courbe différente d'une portion d'ellipse sans pour autant sortir du champs de protection de l'invention, de même, des moyens d'accrochage pourraient être prévus sous le clavier (7) du piano (4) destinés à permettre la fixation de l'organe principal de basculement (2) directement sous celui-ci et permettant ainsi de ne pas utiliser des moyens de liaison et de transmission tel que le demi caisson (5) pour solidariser l'organe principal du piano.

Les moyens de fixation (MF) de l'organe principal sont constitués de manière connue en soi par une coopération entre des tiges filetées et des écrous à ailettes, par exemple. Selon le mode de réalisation préféré, l'organe principal de basculement (2) possède une portion de paroi supérieure (24) s'étendant verticalement au dessus de sa paroi supérieure (20) dans le plan de sa face avant. Ladite portion de paroi supérieure (24) est destinée à être fixée grâce aux moyens de fixation à la paroi frontale (12) du demi caisson (5) quand la paroi inférieure (19) du demi caisson (5) est en appui contre la paroi supérieure (20) de l'organe principal (2). Notons que le demi caisson peut également comporter une portion de paroi inférieure verticale (54) destinée à être fixée grâce aux moyens de fixation (MF) à la face arrière de l'organe principal de basculement (2), ainsi les moyens de fixation (MF) comme par exemple des dispositifs écrous-tiges filetées permettent la fixation de l'organe principal au demi caisson dans deux plans verticaux correspondant aux faces avant et arrière de l'organe. Selon une variante non représentée, les moyens de fixation (MF) pourraient, par exemple, comporter une fixation entre les parois en appui (19, 20) dans le plan horizontal qui constitue l'interface.

Selon le mode de réalisation préféré de l'invention, le dispositif (1) comporte un organe complémentaire de basculement qui est constitué avantageusement par une roue (22) montée du côté du basculement sur le pied arrière (4a), c'est-à-dire entre ledit pied et le plan vertical (P) du support de piano (6) sur lequel on bascule le piano Ladite roue (22) est montée sur un support de roue (23). Ledit support de roue comporte des moyens de fixation non représentés destinés à fixer le support au pied arrière de manière à ce que l'axe de la roue soit disposé longitudinalement sensiblement orthogonalement au plan transversal (T) dans lequel s'effectue le basculement. Ainsi, lors du basculement, la roue (22) disposée dans un plan parallèle au plan transversal (T) permet d'éviter tout choc entre le pied arrière (4a) et le sol (11).

Notons que, selon le mode de réalisation préféré de l'invention, la roue est avantageusement bloquée en rotation autour de son axe et est disposée de manière à se trouver en appui contre le fond horizontal du piano et le pied arrière (4a) de manière à répartir les efforts occasionnés par le basculement. Il est important de noter que la roue (22) constitue un organe de basculement complémentaire qui, en servant d'appui, permet d'éviter lors du basculement que l'arrière du piano ne se dérobe forçant ainsi le basculement à s'effectuer dans le plan transversal (T).

Selon l'invention, le dispositif comporte des moyens de commande (14, 15, 28), des moyens de basculement (2, 3) destinés à permettre aux dits moyens de basculement de se trouver soit dans une position de blocage illustré figure 5a dans laquelle tout basculement est empêché, correspondant à une position légèrement surélevée (A) du piano décrite ultérieurement, soit dans une position de basculement illustré figure 5b dans laquelle lesdits moyens de basculement permettent le basculement du piano vers sa position couchée (B) ou inversement.

Selon le mode de réalisation préféré, les moyens de commande (14, 15, 28) sont montés sur l'organe principal de basculement (2) et comportent une béquille articulée (14) munie d'une roue (80) à son extrémité et un organe de commande (15) de la béquille tel qu'une corde destinée à permettre à ladite béquille de pivoter d'une position de blocage empêchant tout basculement vers une position de basculement où elle se trouve escamotée par rapport à la rampe de basculement (9) afin de permettre le basculement de l'organe principal (2) et du piano (4) tel qu'illustré figure 5b. Notons que lorsque la béquille (14) est en position de blocage, un dispositif de verrouillage comme une goupille (26) par exemple, permet d'éviter tout mouvement intempestif de la béquille vers sa position de basculement comme le montre la figure 2b.

Par ailleurs, comme le montre la figure 2a, l'organe de commande (15) de la béquille (14) est constitué par une corde disposée à l'intérieur de l'organe principal de basculement et dont l'extrémité libre émerge dudit organe (2) par sa paroi latérale (27), aussi la traction sur ladite corde provoque l'escamotage par pivotement de la béquille articulée (14) à l'intérieur de l'organe principal de basculement (2). Un dispositif complémentaire de commande constitué par un autre lien souple (28) permet à l'utilisateur de faire passer la béquille (14) de sa position escamotée vers sa position de blocage, des moyens de rappel (29, 31) permettant audit lien souple (28) d'être maintenu à l'intérieur de l'organe (2), une fenêtre (51) étant prévue à l'extrémité (9a) de la rampe (9) permettant à l'utilisateur de saisir ledit lien souple (28).

Notons que selon une variante non représentée, la corde (15) et le lien souple (28) pourraient être constitués par le même élément. Par ailleurs, les moyens de rappel (29, 31) peuvent avantageusement être constitués par un lien élastique (31) solidaire d'un point fixe de l'organe principal et exerçant une traction sur le lien souple (28), des poulies (29) permettant d'effectuer des renvois successifs du lien élastique (31) et du lien souple (28). Par ailleurs, on peut également noter que l'organe principal de basculement (2) comporte des moyens de butée (21) destinés à limiter le pivotement de la béquille (14) à ses deux positions. Notons que l'extrémité libre de la corde (15) pourrait également être reliée par un lien élastique à un point fixe de l'organe principal, de manière à ce que ladite corde soit escamotée à l'intérieur de l'organe ou soit tendue le long de la paroi latérale de l'organe principal.

Selon le mode de réalisation préféré, le support de piano (6) est destiné à être monté sur le chant latéral (10) sur lequel on veut disposer le piano grâce à des moyens de fixation du support tels que des sangles (30) par exemple. Notons que les sangles (30) destinées à maintenir le support (6) peuvent par exemple être serrées sur une plaque d'appui disposée contre le chant opposé (16) grâce à des boucles de serrage non représentées. Il va de soi que, lorsque le support (6) est constitué par une luge, la ou les sangles passent respectivement entre les patins de la luge et/ou parallèlement aux traverses. Par ailleurs, ledit support (6) comporte avantageusement au moins une patte de blocage (50) destinée à empêcher le pivotement du capot (32) du piano autour de ses charnières (33), ladite patte constituant ainsi les moyens de blocage du capot.

Notons que, selon le mode de réalisation préféré de l'invention, l'organe principal de basculement (2) possède une hauteur maximale (h1), correspondant au demi petit axe de l'ellipse, légèrement inférieure à la longueur (h2) des pieds avant (4b, 4c) du piano de manière à permettre l'installation et la fixation dudit organe principal de basculement à l'aplomb de la partie frontale (8) du piano. De plus, lorsque l'organe principal (2) est en position de blocage, c'est-à-dire lorsque la béquille articulée (14) fait saillie hors de la rampe (9), la hauteur (h3) mesurée entre le fond du piano et l'extrémité de la béquille (14) est supérieure à la longueur (h2) du pied (4b), de manière à permettre son démontage.

L'invention concerne également un procédé de basculement d'un piano. Ainsi, le procédé de basculement d'un piano à l'aide d'un dispositif selon l'invention comporte une étape préliminaire qui consiste à monter les moyens de basculement (2, 3), le support de piano (6) et éventuellement les moyens de transmission et de liaison (5) sur le piano (4) ainsi qu'à démonter la lyre du piano. Ledit procédé comporte ensuite une étape intermédiaire consistant à mettre à l'aide des moyens de commande (14, 15, 28) les moyens de basculement (2, 3) en position de blocage de manière à empêcher le basculement lorsque l'on enlève le pied avant (4b) du piano (4) situé le plus proche du champ latéral (10) sur lequel on veut coucher le piano. Notons qu'avec le dispositif décrit précédemment, le piano se trouve dans une position légèrement surélevée (A) grâce à la différence entre la hauteur (h3) de la béquille et celle (h2) du pied (4b) que l'on peut ainsi aisément démonter, le piano se trouvant alors en appui en trois points sur son pied arrière (4a), sur le pied avant droit (4c) et sur la béquille (14).

L'étape principale dudit procédé consiste, à l'aide des moyens de commande (14, 15) à mettre les moyens de basculement (2, 3) dans la position de basculement en escamotant la béquille de manière à provoquer le basculement de l'organe principal de basculement (2) et d'obtenir ainsi le basculement du piano (4) de sa position légèrement surélevée (A) illustrée figure 5a, vers sa position couchée (B) illustrée figure 5c.

Notons que, selon le mode de réalisation préféré du dispositif (1), l'étape intermédiaire permet, en positionnant la béquille (14) dans sa position de blocage, d'enlever le pied avant (4b) du piano de manière à ce que le poids du piano repose en partie sur ladite béquille (14). Ainsi, lors de l'étape principale, l'escamotage de la béquille (14) permet d'obtenir le basculement du piano en partie sous l'effet de son propre poids comme le montre la figure 5b, l'organe principal de basculement (2) basculant sur sa rampe (9) jusqu'à ce que le support de piano (6) soit disposé contre le sol (11), le piano (4) étant ainsi basculé sur son chant latéral (10).

Il va de soi que le dispositif de basculement (1) et son procédé associé permettent également de basculer le piano de sa position couchée sur son chant latéral vers sa position normale. Notons également que le basculement du piano est obtenu en majeure partie sous l'effet du poids du piano et que l'assistance manuelle consiste à transmettre l'impulsion nécessaire au piano et à contrôler le mouvement de bascule, ledit contrôle pouvant s'effectuer à l'aide d'une poignée située par exemple sur les moyens de liaison.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de basculement (1) destiné au basculement d'un piano (4) de sa position normale, où il est posé sur ses pieds, vers une position couchée (B), où il est posé sur un de ses chants latéraux (10, 16), ledit dispositif étant muni de moyens de basculement (2, 3) comportant au moins un organe principal de basculement (2) constitué par une rampe de basculement (9) de forme courbe **caractérisé en ce qu'**il comporte des moyens de commande (14, 15, 28) des moyens de basculement (2, 3) permettant à ceux-ci de passer d'une position de blocage où le piano (4) est dans une position légèrement surélevée (A) à une position de basculement où le piano et les moyens de basculement basculent vers la position couchée (B) du piano et inversement, lesdits moyens de commande étant constitués par une béquille articulée (14) et des organes de commande (15, 28) de la béquille.

2. Dispositif de basculement (1) d'un piano (4) selon la revendication 1, **caracterisé en ce que** la béquille articulée (14) pivote d'une position de blocage où elle fait saillie en dessous de la rampe de basculement (9) de l'organe principal (2) à une position de basculement où elle est escamotée par rapport à ladite rampe (9) et inversement.

3. Dispositif de basculement (1) d'un piano selon l'une quelconque des revendications précédentes **caractérisé en ce que** la rampe de basculement (9) de l'organe principal (2) possède sensiblement la forme d'un quart d'ellipse.

4. Dispositif de basculement (1) d'un piano (4) selon l'une quelconque des revendications précédentes **caractérisé en ce que** l'organe principal de basculement est destiné à être monté à l'aplomb de la partie frontale (8) du piano (4), sur le piano (4) lui même ou sur des moyens de liaison et de transmission (5) solidaires du piano.

5. Dispositif de basculement (1) d'un piano (4) selon l'une quelconque des revendications précédentes **caractérisé en ce qu'**il comporte un support de piano (6) sur lequel est destiné à être basculé le piano, ledit support (6) étant destiné à être monté sur un chant latéral (10, 16) du piano.

6. Dispositif de basculement (1) d'un piano (4) selon l'une quelconque des revendications précédentes **caractérisé en ce que** l'organe principal de basculement (2) possède une hauteur maximale (h1) légèrement inférieure à la longueur (h2) des pieds avant (4b, 4c) du piano.

7. Dispositif de basculement (1) d'un piano (4) selon la revendication 2 et l'une quelconque des revendications précédentes **caractérisé en ce que** la hauteur (h3) mesurée entre le fond du piano et l'extrémité de la béquille (14) lorsque la béquille articulée (14) fait saillie hors de la rampe (9) est supérieure à la longueur (h2) du pied (4b) du piano.

8. Dispositif de basculement (1) d'un piano (4) selon l'une quelconque des revendications précédentes **caractérisé en ce qu'**il comporte un organe complémentaire de basculement qui est constitué avantageusement par une roue (22) montée du côté du basculement sur le pied arrière (4a) du piano (4).

9. Procédé de basculement d'un piano à l'aide d'un dispositif (1) selon l'une quelconque des revendications précédentes, **caractérisé en ce qu'**une étape préliminaire consiste à monter les moyens de basculement (2, 3) sur le piano (4) et **en ce que** l'étape principale consiste à l'aide de moyens de commande (14,15) à faire passer les moyens de basculement (2, 3) de leur position de blocage à leur position de basculement.

10. Procédé de basculement d'un piano à l'aide d'un dispositif (1) selon la revendication 9 **caractérisé en ce que** le basculement du piano est obtenu en majeure partie sous l'effet du poids du piano.

## Patentansprüche

1. Kippvorrichtung (1) zum Kippen eines Flügels (4) aus seiner normalen Position, in der er auf seinen Füßen ruht, in eine liegende Position (B), in der er auf einer seiner Schmalseiten (10, 16) aufliegt, wobei die Vorrichtung Kippmittel (2, 3) aufweist, welche mindestens ein durch eine bogenförmige Kipprampe (9) gebildetes Hauptkippelement (2) umfassen, **dadurch gekennzeichnet, dass** sie Steuermittel (14, 15, 28) zur Steuerung der Kippmittel (2, 3) umfasst, durch welche diese von einer Verriegelungsposition, in der der Flügel (4) sich in einer leicht erhöhten Position (A) befindet, in eine Kippposition gebracht werden, in der der Flügel und die Kippmittel in die liegende Position (B) des Flügels gekippt werden und umgekehrt, wobei die Steuermittel durch einen gelenkig gelagerten Ständer (14) und durch Steuerelemente (15, 28) des Ständers gebildet werden.

2. Kippvorrichtung (1) zum Kippen eines Flügels (4) nach Anspruch 1, **dadurch gekennzeichnet, dass** der gelenkig gelagerte Ständer (14) aus einer Verriegelungsposition, in der er unter der Kipprampe (9) des Hauptelements (2) herausragt, in eine Kippposition, in der er relativ zur Rampe (9) eingezogen ist, schwenkbar ist, und umgekehrt.

3. Kippvorrichtung (1) zum Kippen eines Flügels (4) nach einem der vorstehenden Ansprüche, **dadurch gekennzeichnet, dass** die Kipprampe (9) des Hauptelements (2) im Wesentlichen die Form einer Viertelellipse aufweist.

4. Kippvorrichtung (1) zum Kippen eines Flügels (4) nach einem der vorstehenden Ansprüche, **dadurch gekennzeichnet, dass** das Hauptkippelement senkrecht zur Vorderseite (8) des Flügels (4) auf dem eigentlichen Flügel (4) oder auf einstückig mit dem Flügel ausgebildete Verbindungs- und Übertragungsmittel (5) montierbar ist.

5. Kippvorrichtung (1) zum Kippen eines Flügels (4) nach einem der vorstehenden Ansprüche, **dadurch gekennzeichnet, dass** sie eine Flügelauflage (6) umfasst, auf welche der Flügel kippbar ist, wobei die Auflage (6) auf eine Schmalseite (10, 16) des Flügels montierbar ist.

6. Kippvorrichtung (1) zum Kippen eines Flügels (4) nach einem der vorstehenden Ansprüche, **dadurch gekennzeichnet, dass** die maximale Höhe (h1) des Hauptkippelements (2) etwas geringer ist als die Länge (h2) der vorderen Füße (4b, 4c) des Flügels.

7. Kippvorrichtung (1) zum Kippen eines Flügels (4) nach Anspruch 2 und nach einem der vorstehenden Ansprüche, **dadurch gekennzeichnet, dass** im relativ zur Rampe ausgefahrenen Zustand des gelenkig gelagerten Ständers (14) die zwischen dem Boden des Flügels und dem Ende des Ständers (14) gemessene Höhe (h3) größer ist als die Länge (h2) des Fußes (4b) des Flügels.

8. Kippvorrichtung (1) zum Kippen eines Flügels (4) nach einem der vorstehenden Ansprüche, **dadurch gekennzeichnet, dass** sie ein ergänzendes Kippelement umfasst, welches vorteilhafterweise durch ein auf der Kippseite am hinteren Fuß (4a) des Flügels (4) montiertes Rad (22) gebildet ist.

9. Verfahren zum Kippen eines Flügels mittels einer Vorrichtung (1) nach einem der vorstehenden Ansprüche, **dadurch gekennzeichnet, dass** eine Vorstufe darin besteht, die Kippmittel (2, 3) auf den Flügel (4) zu montieren und dass die Hauptstufe darin besteht, mittels Steuermittel (14, 15) die Kippmittel (2, 3) aus ihrer Verriegelungsposition in ihre Kippposition zu bringen.

10. Verfahren zum Kippen eines Flügels mittels einer Vorrichtung (1) nach Anspruch 9, **dadurch gekennzeichnet, dass** das Kippen des Flügels zum größten Teil durch sein eigenes Gewicht erreicht wird.

## Claims

1. Tilting device (1), designed for tilting of a piano (4) from its normal position, in which it is placed on its feet, towards a prone position (B), in which it is placed on one of its lateral edges (10, 16), the said device being provided with means (2, 3) for tilting, comprising at least one main tilting unit (2), which consists of a tilting ramp (9) with a curved shape, **characterised in that** it comprises means (14, 15, 28) for controlling the means (2, 3) for tilting, which enable the latter to move from a locking position, in which the piano (4) is in a slightly raised position (A), to a tilting position, in which the piano and the means for tilting tilt towards the prone position (B) of the piano and conversely, the said means for controlling consisting of an articulated prop (14), and control units (15, 28) for the prop.

2. Tilting device (1) according to claim 1 for a piano (4), **characterised in that** the articulated prop (14) pivots from a locking position, in which it projects below the tilting ramp (9) of the main unit (2), to a tilting position, in which it is retracted in relation to the said ramp (9) and conversely.

3. Tilting device (1) according to either of the preceding claims, for a piano, **characterised in that** the tilting ramp (9) of the main unit (2) is substantially in the shape of a quarter of an ellipse.

4. Tilting device (1) according to any one of the preceding claims, for a piano (4), **characterised in that** the main tilting unit is designed to be fitted plumb with the front part (8) of the piano (4), on the piano (4) itself, or on means (5) for connection and transmission which are integral with the piano.

5. Tilting device (1) according to any one of the preceding claims, for a piano (4), **characterised in that** it comprises a piano support (6), on which the piano is designed to be tilted, the said support (6) being designed to be fitted on a lateral edge (10, 16) of the piano.

6. Tilting device (1) according to any one of the preceding claims, for a piano (4), **characterised in that** the main tilting unit (2) has a maximum height (h1) which is slightly shorter than the length (h2) of the front feet (4b, 4c) of the piano.

7. Tilting device (1) according to claim 2 and any one of the preceding claims, for a piano (4), **characterised in that** the height (h3) measured between the base of the piano and the end of the prop (14), when the articulated prop (14) projects from the ramp (9), is greater than the length (h2) of the foot (4b) of the piano.

8. Tilting device (1) according to any one of the preceding claims, for a piano (4), **characterised in that** it comprises an additional tilting unit, which advantageously consists of a wheel (22), which is fitted on the tilting side, on the rear foot (4a) of the piano (4).

9. Method for tilting a piano by means of a device (1) according to any one of the preceding claims, **characterised in that** a preliminary step consists of fitting the means (2, 3) for tilting onto the piano (4), and **in that** the main step consists of moving the means (2, 3) for tilting from their locking position to their tilting position, by means of means (14, 15) for control.

10. Method according to claim 9, for tilting a piano by means of a device (1), **characterised in that** the tilting of the piano is obtained mostly by the effect of the weight of the piano.
